(19) Europäisches Patentamt
European Patent Office
Office européen des brevets

(11) **EP 3 585 168 B1**

(12) **FASCICULE DE BREVET EUROPEEN**

(45) Date de publication et mention
de la délivrance du brevet:
**10.03.2021 Bulletin 2021/10**

(21) Numéro de dépôt: **18711689.2**

(22) Date de dépôt: **22.02.2018**

(51) Int Cl.:
***A01M 7/00*** *(2006.01)*    ***A01M 9/00*** *(2006.01)*

(86) Numéro de dépôt international:
**PCT/IB2018/051120**

(87) Numéro de publication internationale:
**WO 2018/154490 (30.08.2018 Gazette 2018/35)**

(54) **SYSTÈME DE COMMANDE POUR ÉPANDAGE AGRICOLE**

STEUERUNGSSYSTEM FÜR LANDWIRTSCHAFTLICHE FELDSPRITZEN

CONTROL SYSTEM FOR AGRICULTURAL SPRAYER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.02.2017 FR 1751521**

(43) Date de publication de la demande:
**01.01.2020 Bulletin 2020/01**

(73) Titulaire: **Bilberry SAS
94250 Gentilly (FR)**

(72) Inventeurs:
• **SERRAT, Hugo
92210 Saint-Cloud (FR)**
• **BEGUERIE, Jules
91300 Massy (FR)**
• **JOURDAIN, Guillaume
92160 Antony (FR)**

(74) Mandataire: **Le Forestier, Eric
LE FORESTIER CONSEIL
22, rue du Plateau Saint-Antoine
78150 Le Chesnay (FR)**

(56) Documents cités:
**WO-A1-2012/032245    WO-A1-2012/122988**

• **W S Lee ET AL: "Robotic Weed Control System
for Tomatoes", Precision Agriculture, 1 janvier
1999 (1999-01-01), pages 95-113, XP055146573,
Boston DOI: 10.1023/A:1009977903204 Extrait de
l'Internet:
URL:http://search.proquest.com/docview/756
979532**

**Description**

DOMAINE TECHNIQUE

La présente se réfère aux systèmes d'épandage de produits agricoles, et plus particulièrement à ceux connectables sur des véhicules motorisés ou intégrés à ceux-ci.

ETAT DE L'ART

Les champs agricoles nécessitent un entretien régulier que ce soit pour fertiliser les sols, désherber ou traiter les cultures contre les maladies et les insectes nuisibles. Les techniques modernes de culture agricole utilisent des pulvérisateurs qui appliquent des engrais ou des produits phytosanitaires. Les pulvérisateurs peuvent être attachés à un véhicule motorisé qui se déplace dans le champ de cultures, ou bien à un aéronef. Ces pulvérisateurs ont traditionnellement un champ d'action large et peu précis. Ainsi, plus d'engrais que nécessaire est souvent pulvérisé sur les cultures. Parfois aussi le désherbant est épandu en partie sur les cultures au lieu de ne cibler que les mauvaises herbes.

De ce fait, certains ont développé des techniques pour cibler les végétaux à traiter lors de l'épandage. Une de ces techniques consiste à utiliser un drone, tel que décrit dans DE202014002338U1.

Cependant, ce mode de détection est peu précis et entraine une surutilisation des produits d'épandage.

On connaît par ailleurs par le document WO2012/032245A1 un système de commande d'épandage comprenant un ensemble de buses d'épandage, des moyens de cartographie de plantes à traiter utilisant dans une forme de réalisation des caméras, et des moyens pour piloter l'épangage en fonction des données de cartographie.

Ce système comprend également des moyens pour mesurer l'inclinaison de la rampe d'épandage par rapport à l'horizontale de manière à compenser si nécessaire la pression d'alimentation des buses.

On connait également par la thèse « Segmentation d'images pour la localisation d'adventices. Application à la réalisation d'un système de vision pour une pulvérisation spécifique en temps réel », Jérémie Bossu, Université de Bourgogne/CNRS 5158, 4 décembre 2007, un système expérimental de commande d'épandage comprenant une caméra montée à l'avant d'un tracteur, à une hauteur fixe par rapport au sol. Une unité centrale est capable de déterminer l'instant auquel la pulvérisation doit être effectuée en prenant en compte la hauteur de la caméra, l'inclinaison de son axe de visée, la vitesse de déplacement du système et la position des plantes à traiter dans l'image.

RESUME DE L'INVENTION

La présente invention vise à proposer un système de commande d'épandage dans lequel on puisse utiliser les images fournies par plusieurs caméras tout en déterminant des instants de pulvérisation de façon précise et fiable, pour ainsi limiter les quantités de produit appliquées à ce qui est nécessaire.

On propose ainsi selon un premier aspect un système de commande d'épandage de produit agricole, spécialement destiné à être monté sur une rampe d'épandage d'une machine agricole, la rampe d'épandage comportant un ensemble de buses d'épandage sélectivement activables pour épandre un produit agricole, le système comprenant :

- un ensemble de caméras adaptées pour être fixées sur la rampe d'épandage pour acquérir des images d'un sol sur lequel se déplace la machine agricole,
- un système de mesure apte à déterminer une information de distance des caméras au sol en temps réel, et
- une unité de traitement communiquant avec les caméras et ledit système de mesure, l'unité de traitement étant adaptée pour commander sélectivement les buses d'épandage,

où en opération l'unité de traitement est apte à :

identifier un végétal cible dans une image du sol reçue d'une caméra,
à partir d'informations de distance courante au sol de la caméra en question, de direction d'observation du végétal cible et de vitesse d'avancement de la machine agricole, sélectionner au moins une buse à activer afin d'épandre le produit agricole sur le végétal cible, déterminer un instant d'activation de la ou chaque buse sélectionnée et émettre une commande d'activation vers la ou chaque buse pour déclencher l'épandage sur ledit végétal cible.

Dans des modes de réalisation optionnels, le système comprend les caractéristiques additionnelles suivantes, prises individuellement ou en toutes combinaisons que l'homme du métier considérera comme étant techniquement compatibles :

* le système de mesure comprend au moins un capteur apte à mesurer une distance entre la rampe et le sol en un point donné de la rampe éloigné latéralement d'un axe de la machine.
* le ou chaque capteur de distance est basé sur l'écho d'une onde émise est est adapté pour être fixé à la rampe d'épandage de manière à déterminer une information primaire de position de la rampe d'épandage.
* le système de mesure comprend en outre une centrale inertielle adaptée pour être fixée à la rampe d'épandage, la centrale inertielle comportant au moins un accéléromètre et étant apte à acquérir au moins une information additionnelle de position de la rampe d'épandage, en particulier une information d'inclinaison de la rampe par rapport à une direction verticale de gravité et/ou une information de changement de position de la rampe d'épandage.

* l'unité de traitement est adaptée pour combiner l'information primaire de position de la rampe d'épandage acquise par le ou chaque un capteur de distance avec l'information additionnelle de position de la rampe d'épandage acquise par la centrale inertielle et pour générer une information de distance de chaque caméra au sol sans influence de la présence de végétaux entre ledit système de mesure de distance et le sol.

* l'information de direction d'observation du végétal cible est obtenue à partir d'une orientation de l'axe de visée de la caméra et d'une information de position du végétal cible dans l'image prise par la caméra.

* l'axe de visée de la caméra a une orientation oblique plongeant vers l'avant du système par rapport à sa direction de déplacement.

* l'axe de visée de la caméra a une orientation verticale.

* l'instant t2 d'activation d'une buse située à la verticale d'un végétal cible à traiter est déterminé sur la base de la formule suivante :

$$t2 = t1 + d/V$$

où

t1 est l'instant de la prise de vue de l'image contenant le végétal cible,

d est la distance horizontale entre le végétal cible et l'aplomb de la buse, déterminée à partir de la direction d'observation du végétal cible, de la hauteur courante h de la caméra au sol et d'une information de position relative entre la caméra et la buse,

et V est la vitesse de déplacement du système.

On propose selon un second aspect un procédé de commande d'une buse d'épandage d'une rampe d'épandage de machine agricole, le procédé comportant les étapes suivantes :

acquérir une image d'un sol sur lequel se déplace une machine agricole au moyen d'une caméra montée sur la rampe d'épandage,

déterminer en temps réel, à l'aide d'informations fournies par un système de mesure, une information de distance au sol de ladite caméra,

recevoir l'image du sol prise par ladite caméra et ladite information de distance au sol de ladite caméra,

identifier dans ladite image au sol, par traitement de ladite image, un végétal cible à traiter,

déterminer une information de direction d'observation dudit végétal cible dans ladite image,

déterminer à partir de ladite information de direction d'observation au moins une buse d'épandage sélectionnée pour épandre un produit agricole sur ledit végétal cible et, à partir de l'information de distance de la caméra au sol, un instant de temps auquel la ou chaque buse d'épandage sélectionnée doit être activée afin d'épandre le produit agricole sur ledit végétal cible.

Dans des modes de réalisation optionnels, le procédé comprend les caractéristiques additionnelles suivantes, prises individuellement ou en toutes combinaisons que l'homme du métier considérera comme étant techniquement compatibles :

* le procédé comprend de plus l'étape suivante : émettre une commande d'activation adaptée pour être reçue par la ou chaque buse d'épandage sélectionnée à l'instant de temps auquel la ou chaque buse d'épandage sélectionnée doit être activée afin de déclencher l'épandage de produit agricole sur ledit végétal cible.

* l'étape d'acquisition en temps réel d'une information de distance au sol de ladite caméra comprend les opérations suivantes :

acquérir une information primaire de position de la rampe d'épandage au moyen d'un capteur de distance dudit système de mesure,

acquérir une information additionnelle de position de la rampe d'épandage au moyen d'une centrale inertielle dudit système de mesure,

combiner l'information primaire de position de la rampe d'épandage avec l'information additionnelle de position de la rampe d'épandage pour générer l'information de distance de ladite caméra au sol sans influence de la présence de végétaux entre ledit système de mesure de distance et le sol.

* l'information de direction d'observation du végétal cible est obtenue à partir d'une orientation de l'axe de visée de la caméra et d'une information de position du végétal cible dans l'image prise par la caméra.

* l'axe de visée de la caméra a une orientation oblique plongeant vers l'avant du système par rapport à sa direction de déplacement.

* l'axe de visée de la caméra a une orientation verticale.

* l'instant t2 d'activation d'une buse située à la verticale d'un végétal cible à traiter est déterminé sur la base de la formule suivante :

$$t2 = t1 + d/V$$

où

t1 est l'instant de la prise de vue de l'image contenant le végétal cible,
d est la distance horizontale entre le végétal cible et l'aplomb de la buse, déterminée à partir de la direction d'observation du végétal cible, de la hauteur courante h de la caméra au sol et d'une information de position relative entre la caméra et la buse,
et V est la vitesse de déplacement de la rampe.

On propose en outre une machine agricole comprenant :

- une rampe d'épandage comportant :

   une barre s'étendant dans une direction latérale, et
   une pluralité de buses d'épandage montées sur la barre et réparties dans la direction latérale ; et

- un système de commande tel que défini plus haut dans lequel :

   les caméras et le système de mesure de distance sont fixés sur la barre de la rampe d'épandage, et
   l'unité de traitement communique avec la pluralité de buses d'épandage de la rampe d'épandage pour, en opération, émettre la commande d'activation adaptée pour être reçue par la pluralité de buses d'épandages pour déclencher l'épandage du produit agricole sur ledit au moins un végétal cible.

Dans des modes de réalisation optionnels, la machine comprend les caractéristiques additionnelles suivantes, prises individuellement ou en toutes combinaisons que l'homme du métier considérera comme étant techniquement compatibles :

   * l'axe de visée de la caméra a une orientation oblique plongeant vers l'avant de la machine.
   * l'axe de visée de la caméra a une orientation verticale.
   * chaque caméra est associée avec un sous-ensemble respectif donné de la pluralité de buses.

BREVE DESCRIPTION DES DESSINS

D'autres caractéristiques et avantages apparaîtront au cours de la description suivante d'une de ces formes de réalisation, donnée à titre d'exemple non limitatif, en regard des dessins joints.

Sur les dessins :

- la figure 1 est une vue schématique de perspective d'une machine agricole à épandage dans un champ agricole ;
- la figure 2 est une représentation schématique d'un système de commande d'épandage de produit agricole, selon un mode de réalisation, adapté pour être monté sur la machine agricole de la figure 1 ;
- la figure 3 est une représentation schématique d'un autre mode de réalisation du système de commande d'épandage de produit agricole ;
- la figure 4 est une représentation schématique d'un autre mode de réalisation du système de commande d'épandage de produit agricole ;
- la figure 5 est une représentation schématique d'un système inertiel pour un système de commande d'épandage de produit agricole selon l'une des figures 2 à 4 ; et
- la figure 6 est un graphe montrant un procédé de commande d'une buse d'épandage mis en œuvre par le système de commande des figures 1 à 5.

Sur les différentes figures, les mêmes références désignent des éléments identiques ou similaires.

DESCRIPTION DETAILLEE

Dans la présente description, les notions spatiales seront faites en rapport à une direction de déplacement D d'un véhicule agricole fonctionnant tel que traditionnellement. Ainsi, un point A est en « avant » d'un point B dans la direction de déplacement D lorsque le véhicule agricole passe chronologiquement d'abord par le point A, puis par le point B dans la direction de déplacement D.

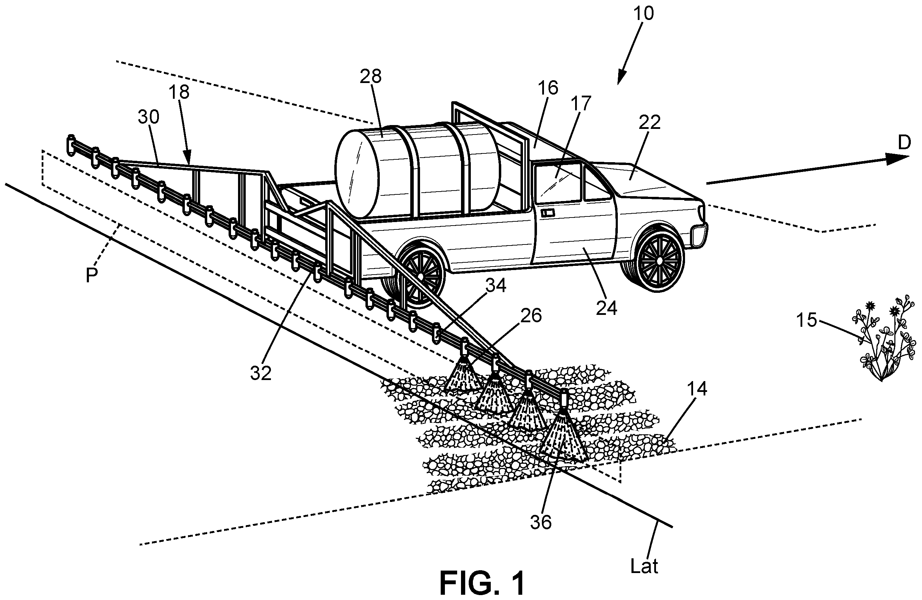

En faisant référence à la figure 1, une machine agricole à épandage, ou machine agricole, 10 se déplace dans une direction D sur un champ agricole ou sol 12. Le champ agricole 12 contient des végétaux 14 à traiter. Ces végétaux 14 peuvent être, par exemple, des mauvaises herbes à éliminer, ou bien des cultures à fertiliser. La machine agricole à épandage 10 inclut un véhicule motorisé 16 de type tracteur sur lequel est monté une rampe à épandage 18. Le véhicule 16 est opéré par un conducteur, typiquement un ouvrier agricole, depuis une cabine 17 du véhicule 16. Cependant, il est envisagé que le véhicule 16 soit entièrement automatisé, et possiblement opéré depuis une station externe au véhicule 16. Le véhicule 16 pourrait aussi être un robot agricole qui pourrait avoir des buses placées sur une rampe d'épandage ou pas, la rampe pouvant être intégrée au robot intégrée ou pas.

Sur le mode de réalisation illustré à la figure 1, la rampe à épandage 18 est montée à l'arrière 20 du véhicule 16. Il est contemplé que la rampe 18 pourrait être montée à une remorque connectée au véhicule 16. Cependant la rampe à épandage 18 pourrait être localisée sur une partie différente du véhicule 16. Par exemple, celle-ci pourrait être montée à l'avant 22 du tracteur ou sur les côtés 24 du véhicule 16. Alternativement, la rampe à épandage 18 peut être localisée sur une remorque du véhicule 16 (non-illustrée), fixée et tirée par un tracteur du véhicule 16, ladite remorque pouvant être motorisée ou non. La rampe à épandage 18 est alimentée en produit agricole 26 de traitement par un réservoir 28 contenant une solution de produit agricole 26, et qui est disposé sur le véhicule 16. Il est contemplé que le réservoir 28 pourrait alternativement être disposé sur la rampe 18, ou sur une remorque comprenant la rampe 18. Le produit agricole 26 est typiquement un désherbant ou un engrais. D'autres exemples de produits agricoles incluent, non exhaustivement, des fongicides, des régulateurs de croissances, des insecticides. Le type de produit sélectionné dépend du type de végétal 14 à traiter. Par exemple, si le végétal 14 est une mauvaise herbe, le produit 26 épandu sera un herbicide. Dans un mode de réalisation, la rampe à épandage 18 est alimentée par un seul type de produit agricole 26. Dans un autre mode de réalisation, la rampe à épandage 18 est alimentée par plusieurs types de produit simultanément ou en séquence, de même type ou de types différents. A cet effet, le tracteur 16 pourrait donc avoir plusieurs réservoirs 28 qui contiendraient une solution de produits agricoles 26 chacun. Dans un mode de réalisation, le réservoir 28 est au départ une cuve d'eau à laquelle le (ou les) produit agricole 26 est ajouté (possiblement par l'intermédiaire d'un (ou plusieurs) réservoir auxiliaire) avant le début ou pendant l'épandage.

Toujours en référence à la figure 1, la rampe à épandage 18 s'étend dans une direction latérale Lat généralement perpendiculaire à la direction D de déplacement de la machine agricole 10.

Il pourrait être envisagé que la rampe à épandage 18 s'étende dans une direction différente, c'est à dire, à un angle autre que 90 degrés entre la direction latérale *Lat* et la direction de déplacement D. Il est aussi envisagé que la rampe à épandage 18 puisse avoir une position variable par rapport au véhicule 16.

La rampe 18 est formée d'une armature 30 de forme générale triangulaire, par exemple dans un plan formé par la direction verticale V et la direction latérale Lat. L'armature 30 inclut une barre inférieure 32 qui s'étend dans la direction latérale *Latet* qui est généralement horizontale et parallèle avec le champ agricole 12. La rampe 18 est rigide et faite de métal, d'alliage de métaux ou de matériaux composites. Dans un mode de réalisation, la rampe 18 est non-articulée. Cependant, dans un autre mode de réalisation, la rampe pourrait être articulée afin de passer d'une position repliée à une position déployée selon que la rampe 18 est en usage ou pas, ou bien si l'on désire épandre que sur une portion plus petite que celle utilisable lorsque la rampe 18 est dépliée.

La rampe 18, dans le mode de réalisation montré à la figure 1 est suspendue au véhicule 16 de sorte qu'elle ne touche pas le champ 12. Cependant, il se pourrait que dans un autre mode de réalisation, la rampe 18 ait des patins ou des roues en contact avec le champ 12. Aussi, bien qu'une seule rampe 18 soit montrée à la figure 1 comme attachée au véhicule 16, il se pourrait que le véhicule 16 inclut une pluralité de rampes 18. Ces rampes 18 pourraient être montées au même endroit du véhicule 16, par exemple, toutes à l'arrière 20, ou bien à des endroits différents, par exemple, une à l'avant 22 et une à l'arrière 20.

La barre 32 inclut une pluralité de buses 34 de pulvérisation montées sur la barre 32 et réparties dans la direction latérale Lat. Les buses 34 sont en communication fluide avec le réservoir 28. Chaque buse 34 diffuse, dans une direction *Dir* généralement perpendiculaire au sol 12) le produit agricole 26 sous forme de gouttelettes sur un champ d'action 36 généralement conique qui lui est propre. Le nombre de buses 34 sur la barre 32 dépend de la largeur du champ d'action 36 sur le champ agricole 12 de chaque buse. Comme il est désirable d'asperger du produit agricole 26 sur toute une portion P du champ agricole 12 balayée par machine agricole à épandage 10, dans un mode de réalisation, il y a un nombre de buses 34 le long de la barre 32 tel que les champs d'action 36 sont contigus les uns aux autres. Cependant, les champs d'action 36 des buses 34 pourraient ne pas être contigus et avoir un espace entre eux. Préférablement cet espace est minimisé. Dans un autre mode de réalisation, il y a chevauchement partiel des champs d'action 36 des buses 34. Dans un exemple de réalisation donné à titre purement non-limitatif, les buses 34 sont espacées de 50 cm les unes des autres sur une barre 32 de 36 m de long.

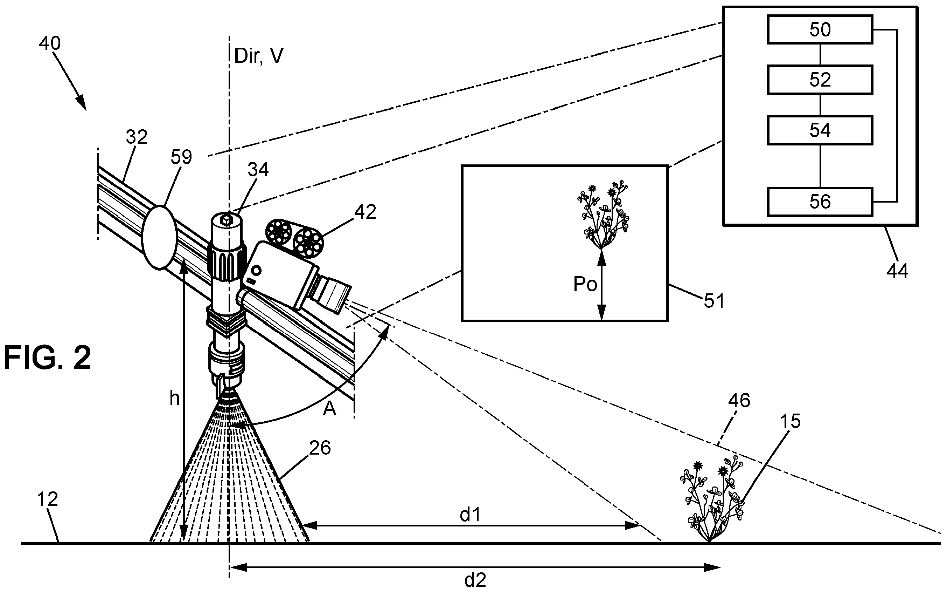

En se référant à présent également à la figure 2, un système 40 de commande de l'épandage du produit agricole 26 va être maintenant décrit. Ce système 40 peut être livré en forme de kit et monté sur la rampe à épandage 18 une fois l'acquisition de la machine agricole 10, ou bien être installé directement en usine sur la rampe à épandage 18 avant livraison de celle-ci pour être connectée au véhicule 16. Le système 40 permet de détecter au moins une position de végétaux cibles 15 afin de cibler l'épandage du produit agricole 26 sur ces végétaux. Ce ciblage permet ainsi réduire le gaspillage du produit agricole 26 mais aussi d'éviter de pulvériser les végétaux 14 qui ne seraient pas visés par le produit agricole 26. Ceci est le cas par exemple lors de désherbage, où il n'est pas favorable d'asperger les récoltes de désherbants ; mais au contraire juste les mauvais herbes. Il est contemplé que le système 40 pourrait avoir des fonctionnalités de détection de l'état de santé du végétal cible 15, ceci par exemple pour des raisons de fertilisation.

Le système 40 inclut une pluralité de caméras 42 et une unité de traitement 44, qui est connectée aux caméras 42 afin de recueillir et traiter les données de la pluralité de caméras 42, et ainsi commander l'action des buses 34 en fonction de l'information fournie par les caméras 42 (i.e. présence ou non d'un végétal cible 15 dans le champ d'action des buses 34 lorsque celles-ci se retrouveront verticalement au-dessus du végétal cible 15). Les buses 34 seront activées par l'unité de traitement 44 pour épandre le végétal cible 15 repéré par les caméras 42 (et non activées si il n'y a pas de végétal repéré dans le champ d'action des buses 34). Dans un mode de réalisation, le système 40 inclut une seule caméra 42 et/ou plusieurs unités de traitement 44. Aussi dans un autre mode de réalisation, le système 40 inclut une pluralité de sous-systèmes de commande, chaque sous-système comprenant une caméra 42 et une unité de traitement 44 associée à une ou plusieurs buses 34. Dans un mode de réalisation, chaque caméra 42 est associée à une buse 34. Dans un mode de réalisation, plusieurs buses 34 sont associées par groupes à une des caméras 42 de façon éventuellement mutuellement exclusive. Les caméras 42 peuvent être connectées à l'unité de traitement 44 physiquement par des câbles ou de manière sans fil. De même, l'unité de traitement 44 pourrait commander les buses 34 via des câbles électriques ou bien sans fil. Les caméras 42 sont par exemple des caméras optiques, par exemple des caméras ayant une résolution de quelques mégapixels. Les caméras 42 peuvent comporter des lentilles pour ajuster le champ de vision 46 et/ou étendre ledit champ de vision 46 dans la direction d'avancée du véhicule 16. Alternativement, des caméras linéaires peuvent être utilisées. Avantageusement, les données générées par de telles caméras linéaires sont alors traitées ou mises en forme pour obtenir une image sous la forme d'une matrice de pixels carrée ou rectangulaire, chaque pixel correspondant à une zone dans le champ de vision d'une caméra.

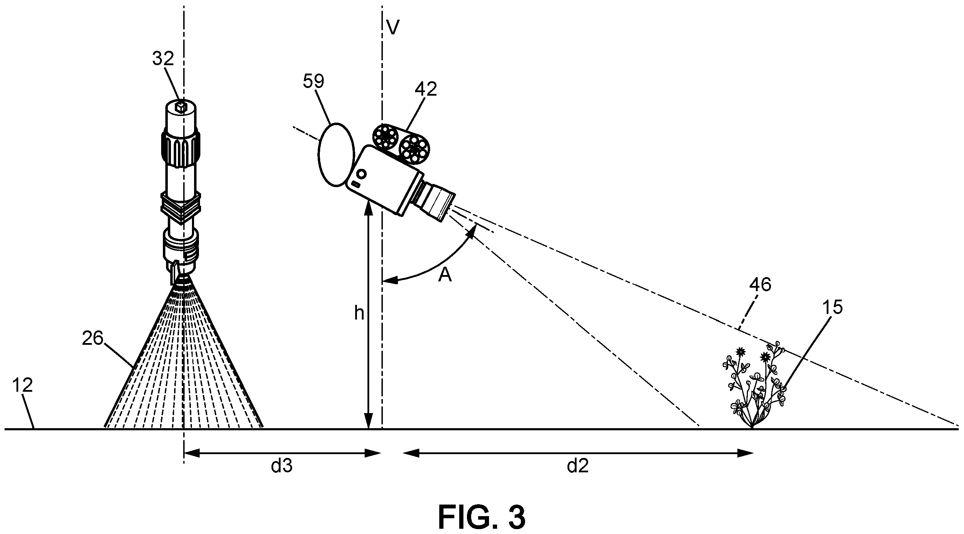

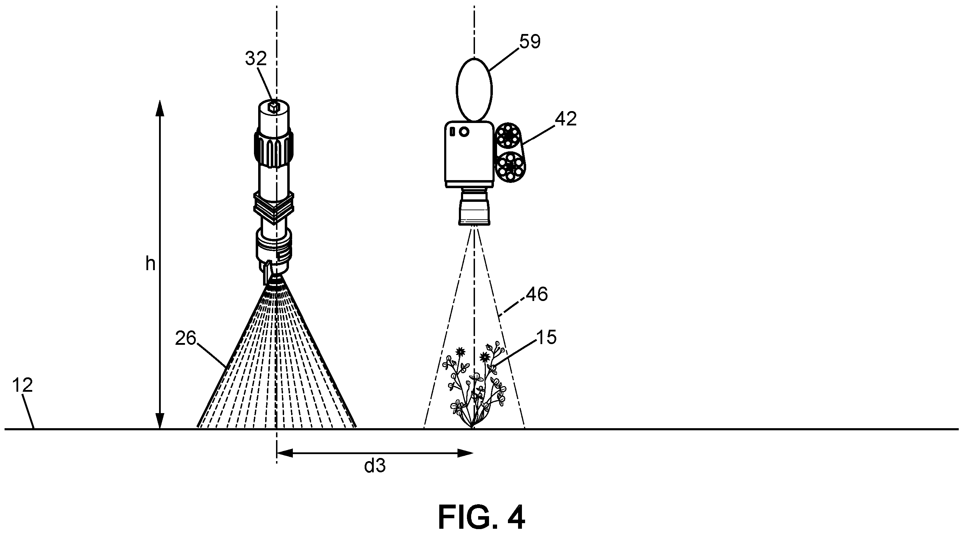

En se référant additionnellement aux figures 3 et 4, les caméras 42 peuvent être positionnées de diverses façons relativement aux buses 34. Les caméras 42 peuvent être installées sur la rampe d'épandage 18, en particulier sur la barre 32 contenant les buses 34, tel qu'illustré à la figure 2 ; ou bien en avant des buses 34 (soit sur la même rampe d'épandage 18 soit sur une autre) par rapport à la direction de déplacement D, tel qu'illustré à la figure 3. Les caméras 42 peuvent être orientées de façon à avoir leurs champs de vision 46 perpendiculaires au sol 12. Ce mode de réalisation pourrait être notamment implémenté en combinaison avec une position des caméras 42 en avant des buses 34, tel qu'illustré à la figure 4. Cependant, tel qu'illustré aux figures 2 et 3, les caméras 42 sont préférentiellement orientées, à un angle A non perpendiculaire par rapport au sol 12 (i.e. un angle non nul par rapport à une verticale V qui est aussi une direction *Dir* d'épandage des buses 34), de façon à ce que les champs de vision 46 soient en avant des champs d'actions 36 des buses 34 (i.e. le champ de vision 46 et le champ d'action 36 étant à une distance d1 l'un de l'autre au sol 12), ceci permettant séquentiellement de détecter le végétal cible 15 puis de l'épandre grâce aux buses 34. Dans un mode de réalisation, il y a un nombre de caméras 42 tel que les champs de vision 46 des caméras 42 sont contigus les uns aux autres dans la direction latérale *Lat* afin de visuellement couvrir la portion P du champ agricole 12 qui va être balayée par la rampe à épandage 18. Cependant, les champs de vision 46 des caméras 42 pourraient ne pas être contigus et avoir un espace entre eux. Préférablement cet espace est minimisé. Dans un autre mode de réalisation, il y a chevauchement partiel des champs de visions 46 des caméras 42. Il pourrait y avoir autant de caméras 42 que de buses 34 si les champs de vision 46 des caméras 42 se superposent aux champs d'actions 36 des buses 34. Dans ce cas, les caméras 42 seraient positionnées à la même position latérale que les buses 32. Mais il pourrait aussi n'y avoir aucune corrélation entre le nombre de caméras 42 et le nombre de buses 34, tant que les champs de vision 46 et d'action 36 dans leur ensemble couvrent, respectivement, la portion P du champ 12.

Selon une autre variante de réalisation non représentée, on peut prévoir des caméras d'axe de visée généralement vertical, montées sur la rampe et donc au voisinage des buses par rapport à la direction de déplacement du système. Ces caméras ont un champ de vision suffisamment large pour pouvoir détecter des végétaux cibles situés suffisamment en amont de la rampe par rapport à sa direction de déplacement. On comprend que dans ce cas seule la partie de l'image correspondant à cette direction amont est utilisée. La direction d'observation du végétal cible est dans ce cas effectuée simplement à partir de la position du végétal cible dans l'image.

Pour fins de clarté, et en faisant référence à la figure 2, le système 40 va être décrit en référence à une caméra 42 associée à une buse 34 et communiquant avec une unité de traitement 44. Cependant, tel que discuté plus haut, la caméra 12 pourrait être associée à plusieurs buses 34, et l'unité de traitement 44 reçoit l'information provenant de plusieurs caméras 42.

L'unité de traitement 44 comprend une pluralité de modules, incluant :

- un module de communication 50 communiquant avec une ou plusieurs des caméras 42 et un système de mesure de distance 59 (décrit ci-dessous) une information de distance h de la caméra 42 au sol 12. Le module de communication 50 reçoit à un instant t1 une image 51 d'une portion du champ 12 fournie en temps réel par chaque caméra 42 et une information de distance h de la caméra 42 par rapport au sol 12 (par exemple hauteur h de la caméra 42 par rapport au sol 12 (le sol 12 pouvant être un sol nu tel qu'illustré ou un sol recouvert de végétation basse),

- un module de traitement d'image 52 communiquant avec le module de communication 50. Le module de traitement d'image 52 identifie la présence éventuelle d'au moins un végétal cible 15 dans l'image 51 et détermine une position spatiale (information de position Po) de ce végétal cible 15 dans l'image 51 (une information de position Po serait par exemple la détermination d'au moins une coordonnée du végétal cible 15 selon la direction Lat dans laquelle les buses 34 sont alignées). Optionnellement, afin de corriger le champ de vision 46 des caméras 42 lorsque la rampe d'épandage 18 a une hauteur variable par rapport au sol 21, le module de traitement d'image 52 détermine une information de position dudit au moins un végétal cible 15 au sol 12 en utilisant l'information de distance de ladite au moins une caméra 42 au sol 12,

- un module de calcul 54 communiquant avec le module de traitement d'image 50 et le module de communication 52. Le module de calcul 54 détermine, à partir de l'information de position Po de ce végétal cible 15 dans l'image 51 quelle(s) buse 34 doit être actionnée pour atteindre le végétal cible 15, et à partir de l'information de distance h de la caméra 42 par rapport au sol 12 un instant de temps t2 auquel l'épandage via la (ou les) buse 34 sélectionnée doit avoir lieu pour atteindre le végétal cible 15, et
- un module de commande 56 communiquant avec le module de calcul 54. Le module de commande 56 transmet l'indication d'activation de la (ou les) buse 34 sélectionnée à l'instant t2 à la (ou les) buse 34 qui se trouvera verticalement au-dessus du (ou des) végétal cible 15 à l'instant t2.

L'unité de traitement 44 peut prendre la forme d'un ordinateur ou d'une unité de calcul comportant un ou plusieurs processeurs ou CPU ainsi qu'une ou plusieurs mémoires. L'unité de traitement 44 peut par ailleurs comporter des modules de traitement parallèles tels que des GPU ou des processeurs à plusieurs cœurs, de sorte à accélérer le traitement des images. L'unité de traitement 44 peut être fournie sous la forme d'une unité individuelle ou être répartie en plusieurs éléments séparés et communiquant entre eux. Avantageusement, l'ensemble des modules de l'unité de traitement 44 (modules de communication 50, de traitement d'image 52, de calcul 54, de commande 56) sont adaptés pour être montés sur le véhicule 16, de sorte à limiter ou éviter des communications avec des éléments distants qui peuvent ralentir le fonctionnement du système et réduire par là même sa vitesse maximale de fonctionnement.

Les caméras 42 filment à l'instant t1 une portion du champ 12 correspondant à leur champ de vision 46 (préférentiellement cette portion se trouve en avant des buses 34). L'information collectée (image 51) est transmise à l'unité de traitement 44 via le module de communication 50. Un algorithme dans le module de traitement d'image 52 permet de déduire de l'image 51 recueillie s'il y a présence de végétal cible 15 dans la portion du champ 12 filmée, et optionnellement, si les champs d'action 36 ne sont pas superposables aux champs de vision 46, la position du végétal cible 15 (au moins dans la direction *Lat* dans laquelle les buses 34 sont alignées).

Ceci peut être accompli par exemple en comparant les différentes couleurs de l'image 51 (couleur du végétal par rapport à la couleur du sol), ou densités des pixels de l'image 51 (le végétal cible 15 pouvant être plus clair ou plus foncé par rapport au sol). Alternativement, le végétal cible 15 peut être identifié en mettant en œuvre un algorithme de reconnaissance de forme, par exemple un algorithme utilisant des techniques d'apprentissage, notamment par réseaux de neurones. Un tel algorithme peut impliquer une première phase d'apprentissage, réalisée sur un ensemble de données d'apprentissages labellisées et permettant de déterminer les paramètres ou poids d'une fonction de calcul d'une probabilité de présence d'un végétal de chaque espèce donnée à chaque position de l'image. Le module de traitement de l'image 51 peut, sous un mode de réalisation, déterminer la présence de plusieurs végétaux cible 15 dans le champ de vision 46, ainsi que de distinguer différents types de végétaux entre eux. Le module de traitement de l'image 51 pourrait aussi déterminer plus qu'une caractéristique. Par exemple, le module de traitement de l'image 51 pourrait non seulement déterminer un végétal cible 15, mais aussi une condition en relation avec le végétal cible 15 (présence d'insectes, présence de trous ou de taches sur les feuillages par exemple). En fonction de ces caractéristiques, la sélection du produit d'épandage pourrait être ajustée.

S'il y a présence du végétal cible 15 à un instant de temps t1, l'unité de traitement 44 via le module de calcul 54 détermine l'instant de temps t2 auquel l'épandage doit avoir lieu. L'instant de temps t2 correspond à l'instant où la (ou les) buses 34 activée pour l'épandage se trouvent dans une proximité verticale au-dessus du végétal cible 15, c'est-à-dire lorsque les champs d'actions 36 de la (ou les) buses 34 activée chevaucheront avec le végétal cible 15. Vu que le champ de vision 46 de la caméra 42 est en avant du champ d'action 26 de la buse 34, les temps t1 et t2 sont distincts. La différence entre les temps t1 et t2 est par exemple de quelques dizaines de secondes, de millisecondes ou d'une centaine de millisecondes. Cependant, dans un mode de réalisation, la différence entre ces deux temps pourrait être plus faible que les valeurs données ci-avant. Dans le cas où plusieurs buses 34 sont associées à la caméra 42, l'unité de traitement 44 détermine quelle buse 34 ou groupe de buses 34 doit être activé pour épandre le végétal cible 15. Une fois la position spatiale du végétal cible 15 est connue, l'unité de traitement 44 sélectionne à activer ainsi que la (ou les buses) 34 qui passera dessus le végétal cible 15 à l'instant t2.

Pour déterminer cet instant t2, le module de calcul 54 prend en compte la vitesse de déplacement V des buses 34 (qui est la vitesse de déplacement du véhicule 16), la hauteur h de la caméra 42 par rapport au sol 12, et la direction A' d'observation du végétal cible (basée sur l'angle A de l'axe de visée de la caméra 42 et sur la position du végétal cible dans l'image), en se basant sur l'équation :

$$t2=t1+d/V$$

où

V est la vitesse de déplacement du système,
d est la distance horizontale entre le végétal cible et l'aplomb de la buse, déterminée comme suit :

d=d2=h*tan(A') pour le mode de réalisation illustré à la figure 2 ;
d=d3+d2=d3+h*tan(A') pour le mode de réalisation illustré à la figure 3 ; et
d=d3 pour le mode de réalisation illustré à la figure 4 (où la caméra a un champ étroit et où l'on fait l'approximation A' = A = 0).

L'équation ci-dessus constitue une base de calcul, d'autres paramètres et notamment des latences à différents niveaux du système, pouvant également être pris en compte dans le calcul effectif.

Dans un mode de réalisation, l'épandage n'a pas lieu à l'instant t2. Par exemple, la présence des végétaux cibles 15 pourrait dans un premier temps être cartographiée sur tout le champ 12. Dans un deuxième temps (consécutivement ou bien plus tard), il y a épandage sur les végétaux cibles 15 en fonction de la cartographie préalablement réalisée.

La hauteur h de la caméra 42 est, dans un mode de réalisation, déterminée en temps réel par le système de mesure de distance 59. Dans un mode de réalisation, le système de mesure de distance 59 est fixé à proximité des caméras 42. Par « à proximité », on entend à une distance suffisamment proche pour que la mesure de distance effectuée par le système de mesure 59 soit comprise dans un intervalle d'erreur acceptable par rapport à la distance réelle entre la caméra 42 et le sol 12, par exemple à une distance inférieure à 2 m de la caméra. Alternativement, le système de mesure 59 peut également être fixé à la machine agricole 10 de sorte à avoir une position relative fixe par rapport à la caméra, de telle manière à ce que la distance de la caméra 42 au sol 12 puisse être déduite de la mesure de distance effectuée par le système de mesure 59 notamment au moyen d'une calibration préalable des position relatives du système de mesure 59 et de la caméra 42. Dans un autre mode de réalisation, si les caméras 42 sont fixées à la barre 32, le système de mesure de distance 59 est fixé à la barre 32. Dans un mode de réalisation, le système de mesure de distance 59 comprend un ou plusieurs capteurs. Dans un mode de réalisation, un capteur de distance est fixé sur la barre 32 tous les 2m50. Dans un mode de réalisation, les capteurs de distance sont des capteurs à ultrasons. Dans un autre mode de réalisation, les capteurs de distance sont des capteurs laser ou optique. Dans un autre mode de réalisation, la hauteur h des caméras 42 est déterminée par un système de mesure de distance 60 qui inclut au moins un capteur de distance 62 et une centrale inertielle 64. Le système de mesure de distance 60 sera décrit ci-dessous. Dans un autre mode de réalisation, la hauteur h est fixée et déterminée par rapport au sol 12 lorsque le véhicule 12 est à l'arrêt. Dans un mode de réalisation, la hauteur h est entre 30 cm et 2 m. La vitesse de déplacement V des buses 34 peut être déterminée par GPS (Global Positioning System), ou tout autre moyen suffisamment précis et rapide pour permettre une détermination en temps réel de la vitesse. Le GPS peut être localisé sur la rampe 18 ou sur le véhicule 16. La buse 34 ayant une connexion fixe au véhicule 16, la vitesse V de déplacement de la buse 34 est la vitesse du véhicule 16. Dans un mode de réalisation, la vitesse de déplacement V de la buse 34 est entre 7 et 25 km/h. L'angle A est un angle fixe connu lors de l'installation du système 40. Dans un mode de réalisation, l'angle A est entre 40 et 60 degrés. Dans un autre mode de réalisation, l'angle A est à 50 degrés, tel qu'illustré aux figures 2 et 3. Dans encore un autre mode de réalisation, l'angle A est à 0 degrés (i.e. la caméra 42 est perpendiculaire au champ 12), tel qu'illustré à la figure 4.

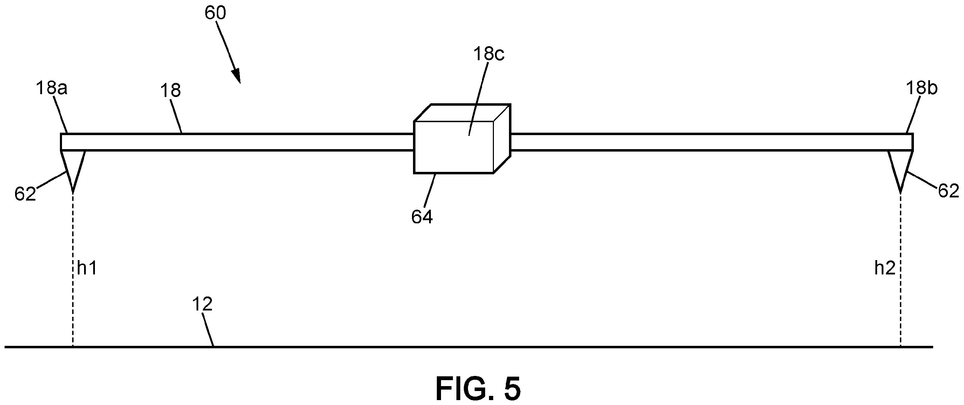

En se référant maintenant à la figure 5, le système de mesure de distance 60 permet de déterminer en temps réel la distance de la caméra 42 par rapport au sol 12 avec la caméra 42 fixée à la rampe 18. Dans un mode de réalisation, le système de mesure de distance 60 comprend deux capteurs de distance 62 positionnés aux extrémités 18a, 18b de la rampe d'épandage 18, et une centrale inertielle 64 positionnée au centre 18c de la rampe d'épandage 18. Les capteurs de distance 62 sont dans un mode de réalisation des capteurs à ultrasons. Dans un autre mode de réalisation, les capteurs 62 sont des capteurs optiques ou laser. Les capteurs de distance 62 et la centrale inertielle 64 sont connectés à l'unité de traitement 44. Les capteurs de distance 62 produisent une information primaire de distance, hauteurs h1 et h2 respectivement, de la rampe 18 et donc des caméras 42 par rapport au sol 12. La centrale inertielle 64 inclut au moins deux de : un gyroscope, accéléromètre et magnétomètre. La centrale inertielle 64 est apte à acquérir, au moins une information additionnelle de position de la rampe d'épandage 18, et en particulier une information d'inclinaison de la rampe 18 par rapport à la verticale V de gravité et/ou une information de changement de position de la rampe d'épandage 18.

Le module de calcul 54 compare les hauteurs primaires h1 et h2 avec les informations additionnelles de position de la rampe d'épandage 18 fournies par la centrale inertielle 64 afin de lisser les mesures h1 et h2 des capteurs de distance 62, c'est-à-dire de sorte à générer une information de hauteur des caméras 42 au sol indépendante de la présence de végétaux entre les capteurs de distance 62 et le sol 12. En effet, dans le cas d'épais végétaux, et d'un champ 12 qui serait recouvert que partiellement de ces végétaux, les capteurs de distance 62 pourraient confondre le végétal avec le sol 12 et donner une hauteur qui serait en fait une hauteur végétal-capteur au lieu de donner la hauteur sol-capteur. Le GPS peut aussi être utilisé comme source d'informations supplémentaire pour augmenter la précision de la dynamique de la rampe 18.

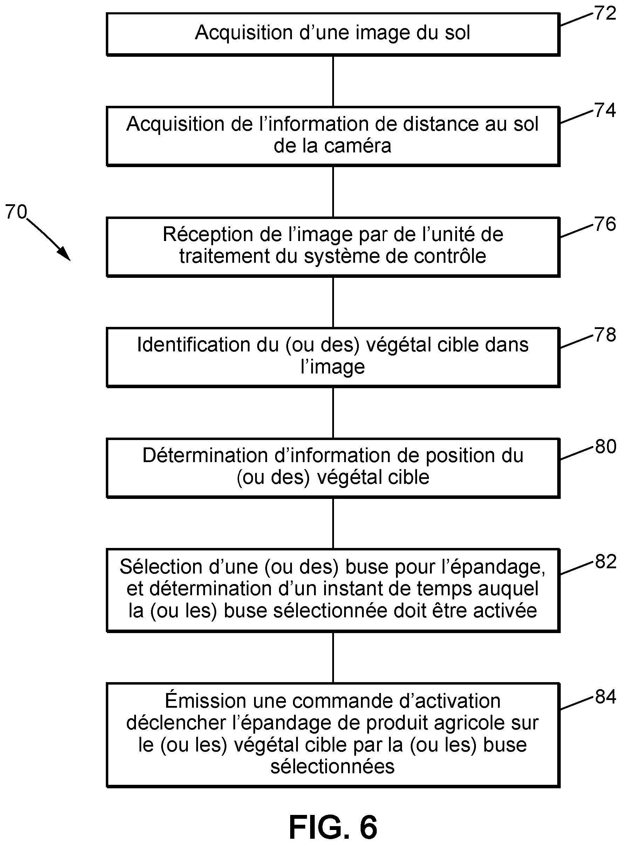

Ainsi, en se référant à la figure 6 et en prenant pour exemple non-limitatif un système ayant une caméra 42 associé à une pluralité de buses 34, le système de commande 40 décrit ci-dessus fonctionne selon un procédé de commande 70 de la (ou les) buse 34 sélectionnée comportant les étapes (non nécessairement effectuées dans cet ordre-là) de :

Etape 72 : acquisition de l'image 51 du sol 12 sur lequel se déplace la machine agricole 10 au moyen de la caméra 42 du système de commande 40 monté sur la machine agricole 10,

Etape 74 : acquisition en temps réel de l'information de distance au sol h de la caméra 42, au moyen du système de mesure de distance 59,

Etape 76 : réception de l'image 51, et de l'information de distance h au moyen du module de communication 50 de l'unité de traitement 44 du système de commande 40,

Etape 78 : identification du (ou des) végétal cible 15 dans l'image 51 au moyen du module de traitement d'image 52 de l'unité de traitement 44,

Etape 80 : détermination de l'information de position Po du (ou des) végétal cible 15 dans l'image 51 au moyen du module de traitement d'image 52 de l'unité de traitement 44,

Etape 82 : détermination à partir de l'information de distance h et de l'information de position Po du ou des végétal cible 15 dans l'image 51, d'une (ou des) buse 34 sélectionnée pour l'épandage et optionnellement de l'instant de temps t auquel la (ou les) buse 34 sélectionnée doit être activée afin d'épandre le produit agricole 26 sur le (ou les) végétal cible 15 au moyen d'un module de calcul 54 de l'unité de traitement 44, et

Etape 84 : émission une commande d'activation adaptée pour être reçue par la (ou les) buse d'épandage 34 sélectionnée afin de déclencher l'épandage de produit agricole 26 sur le (ou les) végétal cible 15 au moyen du module de commande 56 de l'unité de traitement 44.

La description ci-dessus est destinée à n'être qu'un exemple, et l'homme du métier reconnaîtra que des modifications peuvent être apportées aux modes de réalisation décrits sans sortir du cadre de l'invention divulguée. D'autres modifications qui entrent dans le cadre de la présente apparaîtront à l'homme du métier à la lumière d'une révision de cette description et de telles modifications sont censées entrer dans les revendications annexées.

**Revendications**

1. Système (40) de commande d'épandage de produit agricole (26), spécialement destiné à être monté sur une rampe d'épandage (18) d'une machine agricole (10), la rampe (18) d'épandage comportant un ensemble de buses d'épandage (34) sélectivement activables pour épandre un produit agricole (26), le système (40) comprenant :

    - un ensemble de caméras (42) adaptées pour être fixées sur la rampe d'épandage pour acquérir des images (51) d'un sol (12) sur lequel se déplace la machine agricole (10), et
    - une unité de traitement (44) communiquant avec les caméras (42) et un système de mesure de distance, l'unité de traitement (44) étant adaptée pour commander sélectivement les buses d'épandage (34),

    où en opération, l'unité de traitement (44) est apte à : identifier un végétal cible (15) dans une image du sol (51) reçue d'une caméra (42), le système étant **caractérisé en ce que** le système de mesure de distance (59) est apte à déterminer une information de distance des caméras (42) au sol (12) en temps réel, et **en ce que** l'unité de traitement (44) est également apte, à partir d'informations de distance courante au sol de la caméra en question (42), de direction d'observation du végétal cible et de vitesse d'avancement de la machine agricole, à sélectionner au moins une buse (34) à activer afin d'épandre le produit agricole (26) sur le végétal cible (15), et à déterminer un instant d'activation de la ou chaque buse sélectionnée et émettre une commande d'activation vers la ou chaque buse (34) pour déclencher l'épandage sur ledit végétal cible (15).

2. Système de commande selon la revendication 1, dans lequel le système de mesure comprend au moins un capteur (62) apte à mesurer une distance entre la rampe et le sol en un point donné de la rampe éloigné latéralement d'un axe de la machine.

3. Système de commande selon la revendication 2, dans lequel le ou chaque capteur de distance (62) est basé sur l'écho d'une onde émise et est adapté pour être fixé à la rampe d'épandage (18) de manière à déterminer une information primaire de position de la rampe d'épandage (18).

4. Système de commande selon la revendication 3, dans lequel le système de mesure comprend en outre une centrale inertielle (64) adaptée pour être fixée à la rampe d'épandage (18), la centrale inertielle (64) comportant au moins un accéléromètre et étant apte à acquérir au moins une information additionnelle de position de la rampe d'épandage (18), en particulier une information d'inclinaison de la rampe (18) par rapport à une direction verticale de gravité et/ou une information de changement de position de la rampe d'épandage (18).

5. Système de commande selon la revendication 4, dans lequel l'unité de traitement (44) est adaptée pour combiner l'information primaire de position de la rampe d'épandage (18) acquise par le ou chaque un capteur de distance (62) avec l'information additionnelle de position de la rampe d'épandage (18) acquise par la centrale inertielle (64) et pour générer une information de distance de chaque caméra (42) au sol (12) sans influence de la présence de végétaux entre ledit système de mesure de distance (59) et le sol (12).

6. Système selon l'une des revendications 1 à 5, dans lequel l'information de direction d'observation du végétal cible est obtenue à partir d'une orientation de l'axe de visée de la caméra choisie parmi une orientation oblique plongeant vers l'avant du système par rapport à sa direction de déplacement et une orientation verticale, et d'une information de position du végétal cible dans l'image prise par la caméra.

7. Système selon l'une des revendications 1 à 6, dans lequel l'instant (t2) d'activation d'une buse située à la verticale d'un végétal cible à traiter est déterminé sur la base de la formule suivante :

$$t2 = t1 + d/V$$

où

t1 est l'instant de la prise de vue de l'image contenant le végétal cible,
d est la distance horizontale entre le végétal cible et l'aplomb de la buse, déterminée à partir de la direction d'observation du végétal cible, de la hauteur courante h de la caméra au sol et d'une information de position relative entre la caméra et la buse,
et V est la vitesse de déplacement du système.

8. Procédé (70) de commande d'une buse d'épandage (34) d'une rampe d'épandage (18) de machine agricole (10), le procédé (70) comportant les étapes suivantes :

acquérir une image d'un sol (51) sur lequel se déplace une machine agricole (10) au moyen d'une caméra (42) montée sur la rampe d'épandage (18),
déterminer en temps réel, à l'aide d'informations fournies par un système de mesure (59), une information de distance au sol (12) de ladite caméra (42),
recevoir l'image du sol (51) prise par ladite caméra (42) et ladite information de distance au sol de ladite caméra (42),
identifier dans ladite image au sol (51), par traitement de ladite image, un végétal cible (15) à traiter,
déterminer une information de direction d'observation dudit végétal cible (15) dans ladite image (51),
déterminer à partir de ladite information de direction d'observation au moins une buse d'épandage (34) sélectionnée pour épandre un produit agricole (26) sur ledit végétal cible (15) et, à partir de l'information de distance de la caméra (42) au sol (12), un instant de temps auquel la ou chaque buse d'épandage (34) sélectionnée doit être activée afin d'épandre le produit agricole (26) sur ledit végétal cible (15).

9. Procédé selon la revendication 8, comprenant de plus l'étape suivante :
émettre une commande d'activation adaptée pour être reçue par la ou chaque buse d'épandage (34) sélectionnée à l'instant de temps auquel la ou chaque buse d'épandage (34) sélectionnée doit être activée afin de déclencher l'épandage de produit agricole (26) sur ledit végétal cible (15).

10. Procédé selon la revendication 8 ou 9, dans lequel l'étape d'acquisition en temps réel d'une information de distance au sol (12) de ladite caméra (42) comprend les opérations suivantes :

acquérir une information primaire de position de la rampe d'épandage (18) au moyen d'un capteur de distance (62) dudit système de mesure (59),
acquérir une information additionnelle de position de la rampe d'épandage (18) au moyen d'une centrale inertielle (64) dudit système de mesure (59),
combiner l'information primaire de position de la rampe d'épandage (18) avec l'information additionnelle de position de la rampe d'épandage (18) pour générer l'information de distance de ladite caméra (42) au sol (12) sans influence de la présence de végétaux entre ledit système de mesure de distance (59) et le sol (12).

11. Procédé selon l'une des revendications 8 à 10, dans lequel l'information de direction d'observation du végétal cible est obtenue à partir d'une orientation de l'axe de visée de la caméra, choisie parmi une orientation oblique plongeant vers l'avant du système par rapport à sa direction de déplacement et une orientation verticale, et d'une information de position du végétal cible dans l'image prise par la caméra.

12. Procédé selon l'une des revendications 8 à 11, dans lequel l'instant (t2) d'activation d'une buse située à la verticale d'un végétal cible à traiter est déterminé sur la base de la formule suivante :

$$t2 = t1 + d/V$$

où

t1 est l'instant de la prise de vue de l'image contenant le végétal cible,
d est la distance horizontale entre le végétal cible et l'aplomb de la buse, déterminée à partir de la direction d'observation du végétal cible, de la hauteur courante h de la caméra au sol et d'une information de position relative entre la caméra et la buse,
et V est la vitesse de déplacement de la rampe.

13. Machine agricole (10) comprenant :

- une rampe d'épandage (18) comportant :

une barre (32) s'étendant dans une direction latérale (Lat), et
une pluralité de buses d'épandage (34) montées sur la barre (32) et réparties dans la direction latérale (Lat) ; et

- un système de commande (40) selon l'une des revendications 1 à 7 dans lequel :

les caméras (42) et le système de mesure de distance (59) sont fixés sur la barre de la rampe d'épandage (18), et
l'unité de traitement (44) communique avec la pluralité de buses d'épandage (34) de la rampe d'épandage (18) pour, en opération, émettre la commande d'activation adaptée pour être reçue par la pluralité de buses d'épandages (34) pour déclencher l'épandage du produit agricole (26) sur ledit au moins un végétal cible (15).

14. Machine agricole selon la revendication 13, dans laquelle l'axe de visée de la caméra a une orientation choisie parmi une orientation oblique plongeant vers l'avant du système par rapport à sa direction de déplacement et une orientation verticale.

15. Machine agricole selon l'une quelconque des revendications 13 et 14, dans laquelle chaque caméra (42) est associée avec un sous-ensemble respectif donné de la pluralité de buses (34).

**Patentansprüche**

1. System (40) zum Steuern des Ausbringens eines landwirtschaftlichen Produkts (26), insbesondere zur Montage an einem Ausbringungsausleger (18) einer Landwirtschaftsmaschine (10), wobei der Ausbringungsausleger (18) eine Vielzahl von Ausbringungsdüsen (34) aufweist, die selektiv zum Ausbringen eines landwirtschaftlichen Produkts (26) aktivierbar sind, wobei das System (40) umfasst:

- einen Satz von Kameras (42), die an dem Ausbringungsausleger befestigt werden können, um Bilder (51) des Bodens (12) zu erfassen, über den sich die Landwirtschaftsmaschine (10) bewegt, und
- eine Verarbeitungseinheit (44), die mit den Kameras (42) und einem Abstandsmesssystem kommuniziert und die dazu eingerichtet ist, die Ausbringungsdüsen (34) selektiv zu steuern,

wobei die Verarbeitungseinheit (44) dazu eingerichtet ist, im Betrieb:
eine Zielpflanze (15) in einem von einer Kamera (42) empfangenen Bodenbild (51) zu identifizieren, **dadurch gekennzeichnet, dass** das Abstandsmesssystem (59) dazu eingerichtet ist, eine Abstandsinformation der Kameras (42) zum Boden (12) in Echtzeit zu bestimmen, und dass die Verarbeitungseinheit (44) ebenfalls dazu eingerichtet ist, ausgehend von Informationen zum aktuellen Abstand der betreffenden Kamera (42) zum Boden zu bestimmen, zur Richtung der Beobachtung der Zielpflanze und zur Vorschubgeschwindigkeit der Landwirtschaftsmaschine, mindestens eine zu aktivierende Düse (34) auszuwählen, um das landwirtschaftliche Produkt (26) auf die Zielpflanze (15) auszubringen, und einen Aktivierungszeitpunkt der oder jeder ausgewählten Düse zu bestimmen und einen Aktivierungsbefehls an die oder jede Düse (34) auszugeben, um das Ausbringen auf die Zielpflanze (15) auszulösen.

2. Steuerungssystem nach Anspruch 1, bei dem das Messsystem mindestens einen Sensor (62) umfasst, der dazu eingerichtet ist, einen Abstand zwischen dem Ausleger und dem Boden an einem gegebenen Punkt auf der Rampe seitlich entfernt von einer Achse der Maschine zu messen.

3. Steuerungssystem nach Anspruch 2, bei dem der oder jeder Abstandssensor (62) auf dem Echo einer ausgesendeten Welle basiert und dazu eingerichtet ist, derart an dem Ausbringungsausleger (18) angebracht zu werden, um eine primäre Positionsinformation des Ausbringungsauslegers (18) zu bestimmen.

**4.** Steuerungssystem nach Anspruch 3, bei dem das Messsystem des weiteren eine Trägheitseinheit (64) umfasst, die zum Anbringen an dem Ausbringungsausleger (18) eingerichtet ist und die mindestens einen Beschleunigungsmesser umfasst und dazu eingerichtet ist, mindestens eine zusätzliche Information über die Position des Ausbringungsauslegers (18), insbesondere eine Information über die Neigung des Auslegers (18) in Bezug auf eine vertikale Schwerkraftrichtung und/oder eine Information über die Positionsänderung des Ausbringungsauslegers (18), zu erfassen.

**5.** Steuersystem nach Anspruch 4, bei dem die Verarbeitungseinheit (44) dazu eingerichtet ist, die von dem oder jedem Abstandssensor (62) erfasste primäre Positionsinformation des Ausbringungsauslegers (18) mit der von der Trägheitseinheit (64) erfassten zusätzlich Positionsinformation des Ausbringungsauslegers (18) zu kombinieren und eine Abstandsinformation von jeder Kamera (42) zum Boden (12) ohne Einfluss des Vorhandenseins von Vegetation zwischen dem Abstandsmesssystem (59) und dem Boden (12) zu erzeugen.

**6.** System nach einem der Ansprüche 1 bis 5, bei dem die Information über die Richtung der Beobachtung der Zielpflanze aus einer Ausrichtung der Kameravisierachse, die aus einer schräg nach vorne eintauchenden Ausrichtung des Systems in Bezug auf seine Bewegungsrichtung und einer vertikalen Ausrichtung ausgewählt wird, und aus einer Positionsinformation der Zielpflanze in dem von der Kamera aufgenommenen Bild erhalten wird.

**7.** System nach einem der Ansprüche 1 bis 6, bei dem der Zeitpunkt (t2) der Aktivierung einer vertikal zu einer zu behandelnden Zielpflanze angeordneten Düse auf der Grundlage der folgenden Formel bestimmt wird:

$$t2 = t1 + d/V$$

worin

t1 der Zeitpunkt der Aufnahme des die Zielpflanze enthaltenden Bildes ist,
d der horizontale Abstand zwischen der Zielpflanze und der Lotrechten der Düse ist, ermittelt aus der Beobachtungsrichtung der Zielpflanze, der aktuellen Höhe h der Kamera über dem Boden und einer relativen Positionsinformation zwischen Kamera und Düse,
und V die Bewegungsgeschwindigkeit des Systems ist.

**8.** Verfahren (70) zum Steuern einer Ausbringungsdüse (34) eines Ausbringungsauslegers (18) einer Landwirtschaftsmaschine (10), wobei das Verfahren (70) die folgenden Schritte umfasst:

Erfassen eines Bildes eines Bodens (51), über den sich eine Landwirtschaftsmaschine (10) bewegt, mit Hilfe einer Kamera (42), die an dem Ausbringungsausleger (18) angebracht ist,
Bestimmen einer Information über den Abstand der Kamera (42) zum Boden (12) in Echtzeit mit Hilfe von Informationen, die von einem Messsystem (59) bereitgestellt werden,
Empfangen des von der Kamera (42) aufgenommenen Bildes des Bodens (51) und der Bodenabstandsinformation von der Kamera (42),
Identifizieren einer zu behandelnden Zielpflanze (15) in dem Bodenbild (51) durch Verarbeitung des Bildes,
Bestimmen einer Beobachtungsrichtungsinformation der Zielpflanze (15) in dem Bild (51),
Bestimmen, ausgehend von der Beobachtungsrichtungsinformation, mindestens einer ausgewählten Ausbringungsdüse (34) zum Ausbringen eines landwirtschaftlichen Produkts (26) auf die Zielpflanze (15) und, ausgehend von der Abstandsinformation der Kamera (42) vom Boden (12), eines Zeitpunkts, zu dem die oder jede ausgewählte Ausbringungsdüse (34) zu aktivieren ist, um das landwirtschaftliche Produkt (26) auf die Zielpflanze (15) auszubringen.

**9.** Verfahren nach Anspruch 8, das des weiteren den folgenden Schritt umfasst:
Ausgeben eines Aktivierungsbefehls, der dazu geeignet ist, von der oder jeder ausgewählten Streudüse (34) zu dem Zeitpunkt empfangen zu werden, zu dem die oder jede ausgewählte Streudüse (34) zu aktivieren ist, um das Ausbringen des landwirtschaftlichen Produkts (26) auf die Zielpflanze (15) auszulösen.

**10.** Verfahren nach Anspruch 8 oder 9, bei dem der Schritt des Erfassens einer Echtzeit-Bodenabstandsinformation (12) von der Kamera (42) die folgenden Abläufe umfasst:

Erfassen einer primären Positionsinformation des Ausbringungsauslegers (18) mittels eines Abstandssensors (62) des Messsystems (59),
Erfassen einer zusätzlichen Information über die Position des Ausbringungsauslegers (18) mittels einer Trägheitseinheit (64) des Messsystems (59),
Kombinieren der primären Positionsinformation des Ausbringungsauslegers (18) mit der zusätzlichen Positionsinformation des Ausbringungsauslegers (18), um die Abstandsinformation der Kamera (42) zum Boden (12) ohne Einfluss des Vorhandenseins von Vegetation zwischen dem Abstandsmesssystem (59) und dem Boden (12) zu erzeugen.

11. Verfahren nach einem der Ansprüche 8 bis 10, bei dem die Information über die Richtung der Beobachtung der Zielpflanze aus einer Ausrichtung der Kameravisierachse, die aus einer nach vorne schräg eintauchenden Ausrichtung des Systems in Bezug auf seine Bewegungsrichtung und einer vertikalen Ausrichtung ausgewählt wird, und aus einer Positionsinformation der Zielpflanze in dem von der Kamera aufgenommenen Bild erhalten wird.

12. Verfahren nach einem der Ansprüche 8 bis 11, bei dem der Zeitpunkt (t2) der Aktivierung einer vertikal zu einer zu behandelnden Zielpflanze angeordneten Düse auf der Grundlage der folgenden Formel bestimmt wird:

$$t2 = t1 + d/V$$

worin

t1 der Zeitpunkt der Aufnahme des die Zielpflanze enthaltenden Bildes ist,
d der horizontale Abstand zwischen der Zielpflanze und der Lotrechten der Düse ist, ermittelt aus der Beobachtungsrichtung der Zielpflanze, der aktuellen Höhe h der Kamera über dem Boden und einer relativen Positionsinformation zwischen Kamera und Düse,
und V die Bewegungsgeschwindigkeit des Auslegers ist.

13. Landwirtschaftsmaschine (10) mit

- einem Ausbringungsausleger (18) mit :

einer sich in seitlicher Richtung (Lat) erstreckenden Stange (32), und
einer Vielzahl von Ausbringungsdüsen (34), die an der Stange (32) angebracht und in der seitlichen Richtung (Lat) verteilt sind; und

- einem Steuerungssystem (40) nach einem der Ansprüche 1 bis 7, in dem :

die Kameras (42) und das Abstandsmesssystem (59) an dem Ausbringungsausleger (18) montiert sind, und
die Verarbeitungseinheit (44) mit der Vielzahl von Ausbringungsdüsen (34) des Ausbringungsauslegers (18) kommuniziert, um im Betrieb den Aktivierungsbefehl auszugeben, der dazu eingerichtet ist, von der Vielzahl von Ausbringungsdüsen (34) empfangen zu werden, um das Ausbringen des landwirtschaftlichen Produkts (26) auf die mindestens eine Zielpflanze (15) auszulösen.

14. Landmaschine nach Anspruch 13, bei der die Visierachse der Kamera eine Ausrichtung hat, die aus einer schräg nach vorne eintauchenden Ausrichtung des Systems in Bezug auf seine Bewegungsrichtung und einer vertikalen Ausrichtung ausgewählt ist.

15. Landmaschine nach einem der Ansprüche 13 und 14, bei der jede Kamera (42) einer jeweiligen gegebenen Untermenge der Vielzahl von Düsen (34) zugeordnet ist.

**Claims**

1. System (40) for controlling the spraying of agricultural product (26), which system is specifically intended to be mounted on a spray boom (18) of an agricultural machine (10), the spray boom (18) comprising a set of spray nozzles (34) that are selectively activatable to spray an agricultural product (26), the system (40) comprising:

- a set of cameras (42) adapted to be secured to the spray boom for capturing images (51) of a ground (12) on which the agricultural machine (10) moves, and
- a processing unit (44) communicating with the cameras (42) and a distance measuring system (59), the processing unit (44) being adapted to selectively control the spray nozzles (34),

wherein, during operation, the processing unit (44) is capable of:
identifying a target plant (15) in an image (51) of the ground received from a camera (42);
the system being **characterized in that** the distance measuring system (59) is capable of determining in real time distance information between the cameras (42) and the ground (12), and **in that** the processing unit (44 is also capable, on the basis of information about the current distance between the camera (42) at stake and the ground, of the direction of observation of the target plant and of a ground speed of the agricultural machine, of selecting at least one nozzle (34) to be activated in order to spray the agricultural product (26) onto the target plant (15), and of determining an activation time of the or each selected nozzle and transmitting an activation command to the or each nozzle (34) to trigger the spraying onto said target plant (15).

**2.** Control system according to claim 1, wherein the measuring system comprises at least one sensor (62) for measuring a distance between the boom and the ground at a given point on the boom that is laterally spaced from an axis of the machine.

**3.** Control system according to claim 2, wherein the or each distance sensor (62) is based on the echo of a transmitted wave and is suitable for being secured to the spray boom (18) so as to determine primary information about the position of the spray boom (18).

**4.** Control system according to claim 3, wherein the measuring system further comprises an inertial unit (64) suitable adapted to be secured to the spray boom (18), the inertial unit (64) comprising at least one accelerometer and being capable of capturing at least one additional piece of information about the position of the spray boom (18), in particular information about the inclination of the boom (18) with respect to a vertical direction of gravity and/or information about the change in position of the spray boom (18).

**5.** Control system according to claim 4, wherein the processing unit (44) is adapted for combining the primary information about the position of the spray boom (18) captured by the or each distance sensor (62) with the additional information about the position of the spray boom (18) captured by the inertial unit (64) and for generating information about the distance between each camera (42) and the ground (12) while avoiding the influence of plants being present between said distance measuring system (59) and the ground (12).

**6.** System according to any of claims 1 to 5, wherein the information about the direction of observation of the target plant is obtained from an orientation of the line of sight of the camera, selected among an oblique orientation down toward the front of the system with respect to its direction of movement and a vertical orientation, and from information about the position of the target plant in the image taken by the camera.

**7.** System according to any of claims 1 to 6, wherein the activation time (t2) of a nozzle located vertically over a target plant to be treated is determined based on the following formula:

$$t2=t1+d/V$$

where

t1 is the time that the shot of the image containing the target plant is taken,

d is the horizontal distance between the target plant and the vertical projection of the nozzle, determined from the direction of observation of the target plant, the current height h of the camera with respect to the ground and information about the relative position of the camera and the nozzle,

and V is the speed of movement of the system.

**8.** Method (70) for controlling a spray nozzle (34) of a spray boom (18) of an agricultural machine (10), the method (70) comprising the following steps:

capturing an image of a ground (51) on which an agricultural machine (10) moves by means of a camera (42) mounted on the spray boom (18),

determining, in real time, information about the distance between said camera (42) and the ground (12) using information supplied by a measuring system (59),

receiving the ground image (51) taken by said camera (42) and said information about the distance between said camera (42) and the ground,

identifying in said ground image (51), by processing said image, a target plant (15) to be treated,

determining information about the direction of observation of said target plant (15) in said image (51),

determining, from said information about the direction of observation, at least one spray nozzle (34) selected for spraying an agricultural product (26) onto the target plant (15) and, from the information about the distance between the camera (42) and the ground (12), a time at which the or each selected spray nozzle (34) has to be activated in order to spray the agricultural product (26) onto the target plant (15).

**9.** Method according to claim 8, further comprising the following step:
transmitting an activation command adapted for being received by the or each selected spray nozzle (34) at the time at which the or each selected spray nozzle (34) has to be activated in order to trigger the spraying of the agricultural product (26) onto said target plant (15).

**10.** Method according to claim 8 or 9, wherein the step of capturing, in real time, information about the distance between said camera (42) and the ground (12) includes the following steps:

capturing primary information about the position of the spray boom (18) by means of a distance sensor (62) of said measuring system (59); capturing additional information about the position of the spray boom (18) by means of an inertial unit (64) of said measuring system (59); combining the primary information about the position of the spray boom (18) with the additional information about the position of the spray boom (18) to generate information about the distance between said camera (42) and the ground (12) while avoiding the influence of plants being present between said distance measuring system (59) and the ground (12).

11. Method according to any of claims 8 to 10, wherein the information about the direction of observation of the target plant is obtained from an orientation of the line of sight of the camera, selected among an oblique orientation down toward the front of the system with respect to its direction of movement and a vertical orientation, and from information about the position of the target plant in the image taken by the camera.

12. Method according to any of claims 18 to 11, wherein the activation time (t2) of a nozzle located vertically over a target plant to be treated is determined based on the following formula:

$$t2 = t1 + d/V$$

where

t1 is the time at which the image containing the target plant is taken,
d is the horizontal distance between the target plant and the vertical projection of the nozzle, determined from the direction of observation of the target plant, the current height h of the camera above the ground and information about the relative position between the camera and the nozzle,
and V is the speed of movement of the boom.

13. Agricultural machine (10) comprising:

- a spray boom (18) comprising:

a bar (32) extending in a lateral direction (Lat); and
a plurality of spray nozzles (34) mounted on the bar (32) and distributed in the lateral direction (Lat); and

- a control system (40) according to any of claims 1 to 7 wherein:

the cameras (42) and the distance measuring system (59) are secured to the bar of the spray boom (18), and
the processing unit (44) communicates with the plurality of spray nozzles (34) of the spray boom (18) in order to transmit, in operation, the activation command adapted to be received by the plurality of spray nozzles (34) in order to trigger the spraying of the agricultural product (26) onto said at least one target plant (15).

14. Agricultural machine according to claim 13, wherein the line of sight of the camera has an orientation selected among an oblique orientation down toward the front of the machine with respect to its movement direction and a vertical orientation.

15. Agricultural machine according to any of claims 13 and 14, wherein each camera (42) is associated with a particular given subset of the plurality of nozzles (34).

FIG. 1

**FIG. 2**

FIG. 3

FIG. 4

**FIG. 5**

EP 3 585 168 B1

Acquisition d'une image du sol — 72

Acquisition de l'information de distance au sol de la caméra — 74

70

Réception de l'image par de l'unité de traitement du système de contrôle — 76

Identification du (ou des) végétal cible dans l'image — 78

Détermination d'information de position du (ou des) végétal cible — 80

Sélection d'une (ou des) buse pour l'épandage, et détermination d'un instant de temps auquel la (ou les) buse sélectionnée doit être activée — 82

Émission une commande d'activation déclencher l'épandage de produit agricole sur le (ou les) végétal cible par la (ou les) buse sélectionnées — 84

## FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202014002338 U1

- WO 2012032245 A1

**Littérature non-brevet citée dans la description**

- **JÉRÉMIE BOSSU.** Segmentation d'images pour la localisation d'adventices. Application à la réalisation d'un système de vision pour une pulvérisation spécifique en temps réel. Université de Bourgogne/CNRS 5158, 04 Décembre 2007